Europäisches Patentamt

European Patent Office

Office européen des brevets

(11) Veröffentlichungsnummer: **0 356 849**
**A2**

(12) **EUROPÄISCHE PATENTANMELDUNG**

(21) Anmeldenummer: **89115330.6**

(22) Anmeldetag: **19.08.89**

(51) Int. Cl.⁵: **B60D 1/40**

(30) Priorität: **30.08.88 DE 8810940 U**

(43) Veröffentlichungstag der Anmeldung:
**07.03.90 Patentblatt 90/10**

(84) Benannte Vertragsstaaten:
**AT BE CH DE FR GB LI LU NL SE**

(71) Anmelder: **Maschinenfabriken Bernard Krone GmbH**
**Heinrich-Krone-Strasse 10**
**D-4441 Spelle(DE)**

(72) Erfinder: **Focks, Hubert**
**Erlenweg 36**
**D-4450 Lingen(DE)**
Erfinder: **Evers, Heinz**
**Nösterberg 2**
**D-4472 Haren 3(DE)**

(74) Vertreter: **Busse & Busse Patentanwälte**
**Postfach 1226 Grosshandelsring 6**
**D-4500 Osnabrück(DE)**

(54) **Zentralachsanhänger.**

(57) Der Zentralachsanhänger (1) weist eine vorderseitige Anschlußvorrichtung (3) für eine Anhängung an ein Zugfahrzeug (2) auf, deren mit der Kupplung (4) des Zugfahrzeugs (2) verbindbares Anschlußglied (6) in Abhängigkeit vom Einschlagwinkel zwischen Zugfahrzeug und Anhänger mittels einer Stellvorrichtung (7) in seinem Abstand zur vorderen Abschlußkante des Anhängers verstellbar ist. Das Anschlußglied (6) ist über eine in einer Schiebeführung (13) des Anhängers (1) längsverschiebliche Hauptstrebe (12) der Anschlußvorrichtung (3) abgestützt und die Hauptstrebe (12) ist mittels eines mechanischen Hebelgetriebes (9,10,11) verschiebbar. Dabei ist die Hauptstrebe (12) an ihrem vorderen Ende über ein erstes Gelenk (14) mit einem ersten Doppelhebel (9) verbunden, dessen vorderer Teil das als Kupplungsöse ausgebildete Anschlußglied (6) umfaßt und dessen rückwärtiges Ende mit einem zweiten Doppelhebel (10) über ein entlang dem rückwärtigen Bereich des zweiten Doppelhebels (10) verschieblich geführtes zweites Gelenk (15) verbunden ist. Der zweite Doppelhebel (10) zwischen seinen Enden über ein drittes Gelenk (19) mit der Hauptstrebe (12) verbunden und greift an seinem vorderen Ende mittels eines vierten Gelenkes (24) am vorderen Ende eines Lenkers (11) an. Dieser Lenker (11) greift seinerseits an seinem rückwärtigen Ende über ein fünftes Gelenk (26) im Bereich der Längsmittelebene der Schiebeführung (13) am Anhänger (1) an. Der erste Doppelhebel (9) weist im Abstand beidseits des Anschlußgliedes (6) angeordnete Widerlagerarme auf, deren vorderen Enden sich in Anhängestellung der Teile am Zugfahrzeug (2) beidseits dessen Kupplung (4) abstützen und den ersten Doppelhebel (9) gegen horizontale Schwenkbewegungen um die Kupplungsachse (5) verriegeln.

## Zentralachsanhänger

Die Erfindung betrifft einen Zentralachsanhänger in einer aus der DE-A-37 00 116 bekannten Ausbildung gemäß dem Oberbegriff des Anspruchs 1.

Der Erfindung liegt die Aufgabe zugrunde, einen Zentralachsanhänger zu schaffen, der eine Kurzanhängung an die Anhängekupplung eines Zugfahrzeugs und eine Abstandsveränderung in Abhängigkeit von Kurvenfahrten mit einer baulich besonders einfachen und robusten Anschlußvorrichtung mit eindeutiger Kraftübertragung in allen Betriebsstellungen ermöglicht.

Zur Lösung dieser Aufgabe ist der Zentralachsanhänger nach der Erfindung gekennzeichnet durch die im kennzeichnenden Teil des Anspruchs 1 angegebenen Merkmale. Hinsichtlich weiterer Ausgestaltungen wird auf die Ansprüche 2 bis 4 verwiesen.

Dia Anschlußvorrichtung des Zentralachsanhängers nach der Erfindung schafft ein vollmechanisches, an eine normale Anhängekupplung eines Zugfahrzeugs anschließbares Kurzkuppelsystem einfacher, robuster und preisgünstig herstellbarer Bauart, das unanfällig gegen Betriebsstörungen ist und proportionale Kraftübertragungen ohne Ansprechverzug gewährleistet.

Ein Ausführungsbeispiel des Gegenstands der Erfindung ist in der Zeichnung näher veranschaulicht. Im einzelnen zeigen:

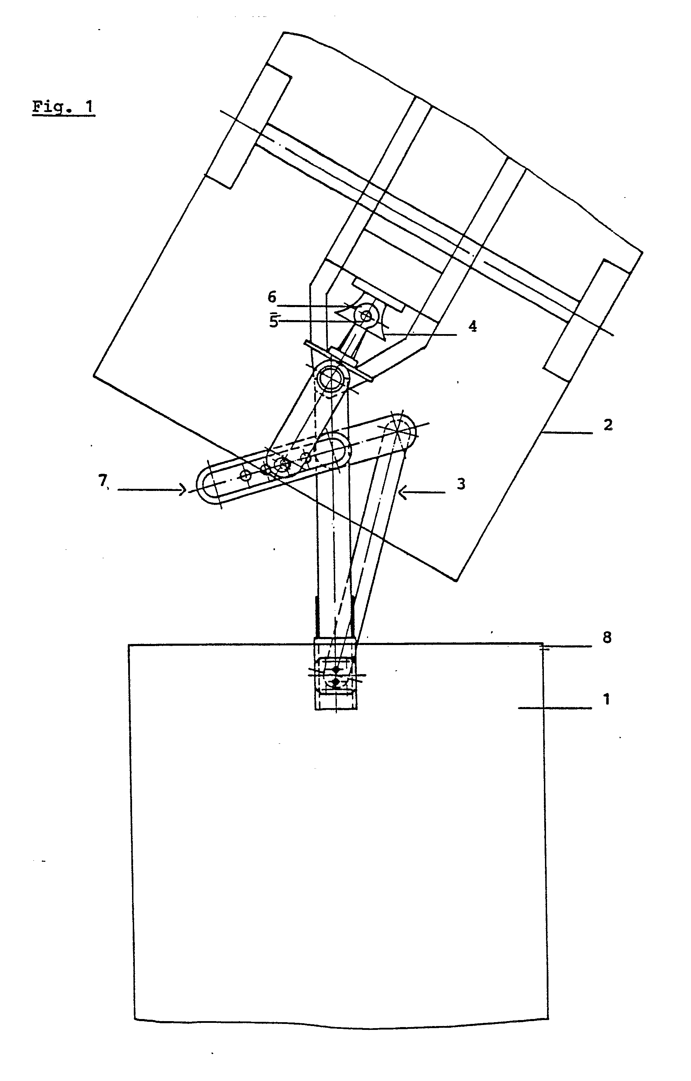

. Fig. 1 eine schematische, abgebrochene Draufsicht auf einen mit einem Einschlagwinkel von 30° einem Zugfahrzeug nachlaufenden Zentralachsanhänger nach der Erfindung,

Fig. 2 eine Draufsicht ähnlich Fig. 1 mit einem Einschlagwinkel von 60° zwischen Zugfahrzeug und Zentralachsanhänger,

Fig. 3 eine Draufsicht ähnlich Fig. 1 und 2 mit einem Einschlagwinkel von 90° zwischen Zugfahrzeug und Zentralachsanhänger,

Fig. 4 eine abgebrochene Draufsicht auf die Anschlußvorrichtung in vergrößerter Einzeldarstellung mit einer Anordnung der Teile bei einem Einschlagwinkel von 0°,

Fig. 5 eine Draufsicht ähnlich Fig. 4 mit einer Anordnung der Teile bei einem Einschlagwinkel von 30°,

Fig. 6 eine Draufsicht ähnlich Fig. 4 und 5 mit einer Anordnung der Teile bei einem Einschlagwinkel von 60°,

Fig. 7 eine Draufsicht ähnlich Fig. 4 bis 6 mit einer Anordnung der Teile bei einem Einschlagwinkel von 90°,

Fig. 8 einen abgebrochenen vertikalen Längsmittelschnitt durch die Anschlußvorrichtung gemäß Fig. 4, und

Fig. 9 einen Schnitt nach der Linie IX-IX in Fig. 8.

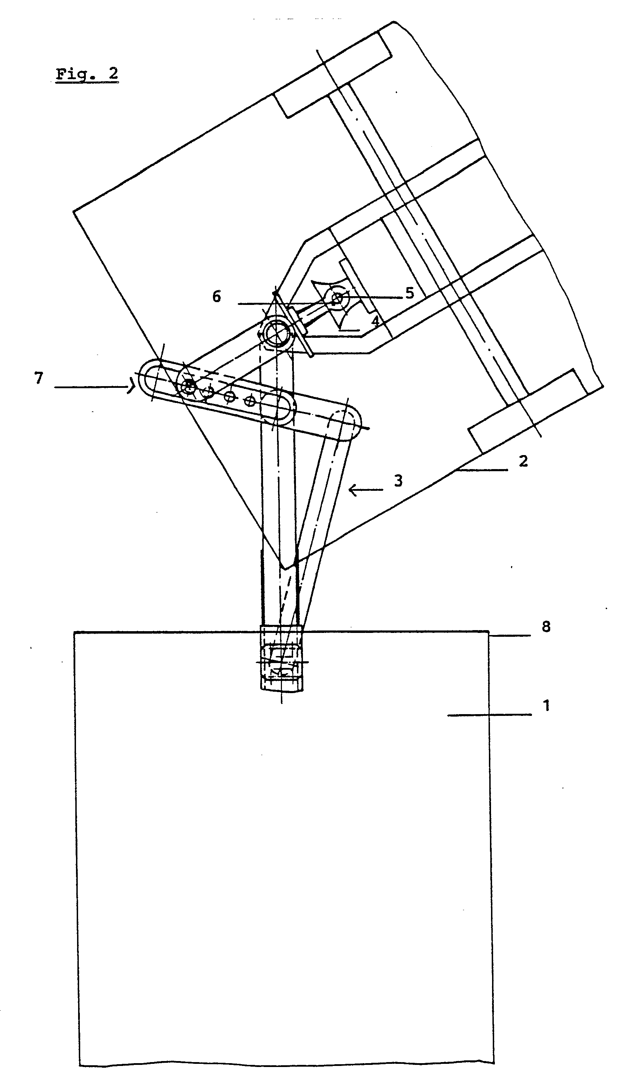

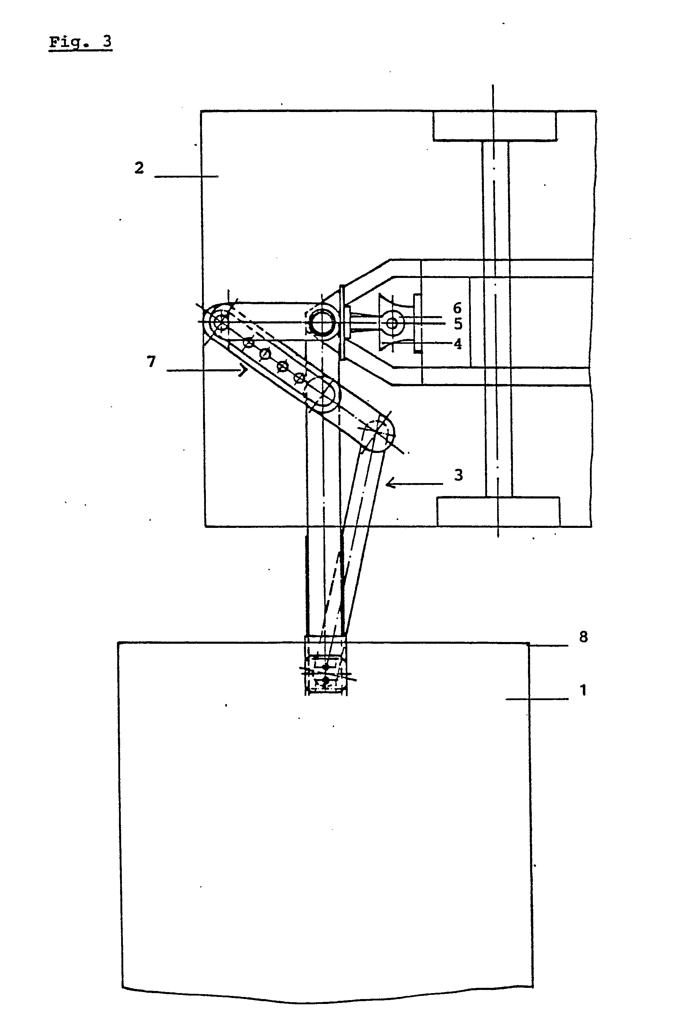

Die Zeichnung veranschaulicht in den Fig. 1 bis 3 lediglich den vorderen Bereich des erfindungsgemäßen, als Zentralachs anhänger 1 ausgebildeten Anhängers, der für eine Anhängung an ein Zugfahrzeug 2, das seinerseits lediglich mit seinem rückwärtigen Bereich schematisch veranschaulicht ist, mit einer als Ganzes mit 3 bezeichneten Anschlußvorrichtung versehen ist.

Das Zugfahrzeug 2 weist in seinem rückwärtigen Bereich unterhalb einer Ladeebene eine übliche Kupplung 4 mit vertikaler Kupplungsachse 5 auf, mit der das Anschlußglied 6 der Anschlußvorrichtung 3 kuppelbar ist. Die Anschlußvorrichtung 3 umfaßt eine als Ganzes mit 7 bezeichnete Stellvorrichtung, durch die in Abhängigkeit vom Einschlagwinkel zwischen Zugfahrzeug 2 und Anhänger 1 der Abstand des Anschlußgliedes 6 zur vorderen Abschlußkante 8 des Anhängers 1 verstellbar ist.

Der bei einem Einschlagwinkel von 0° vorliegende Minimalabstand zwischen dem Anschlußglied 6 und der vorderen Abschlußkante 8 des Anhängers 1 erfährt bevorzugt eine maximale einschlagwinkelabhängige Vergrößerung von 400 mm oder darüber, wodurch sichergestellt ist, daß trotz geringem Aufbauabstand zwischen Zugfahrzeug 2 und Anhänger 1 in Geradeausfahrt bei Kurvenfahrten - bishin zu einem Einschlagwinkel von 90°, wie er bei Rangiervorgängen wünschenswert ist - keine Aufbauberührungen stattfinden. Dies veranschaulichen die Fig. 1 bis 3 mit ihrer Darstellung der Lage der Fahrtzeugaufbauten zueinander bei Einschlagwinkeln von 30°, 60° bzw. 90°.

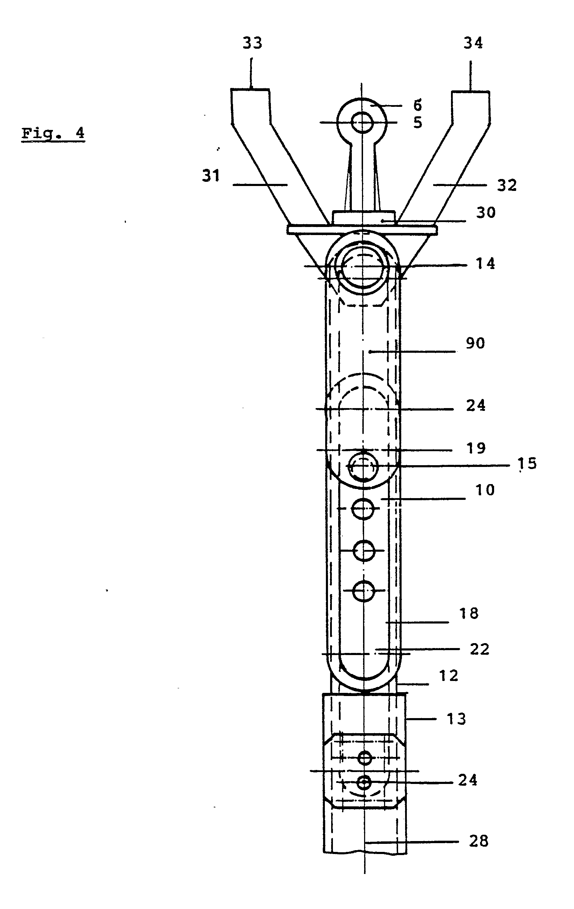

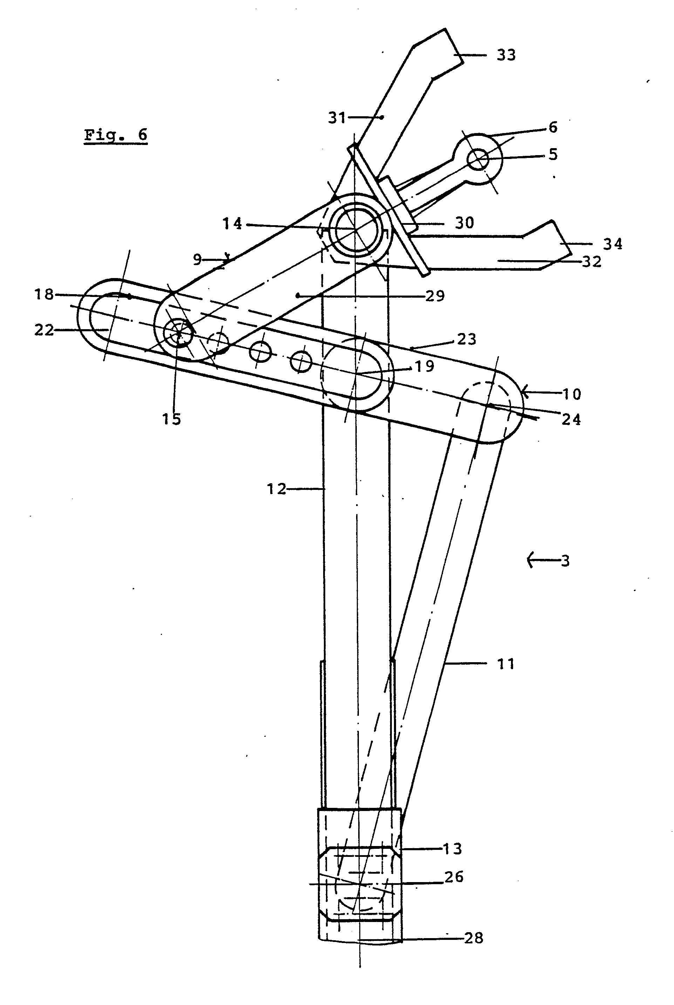

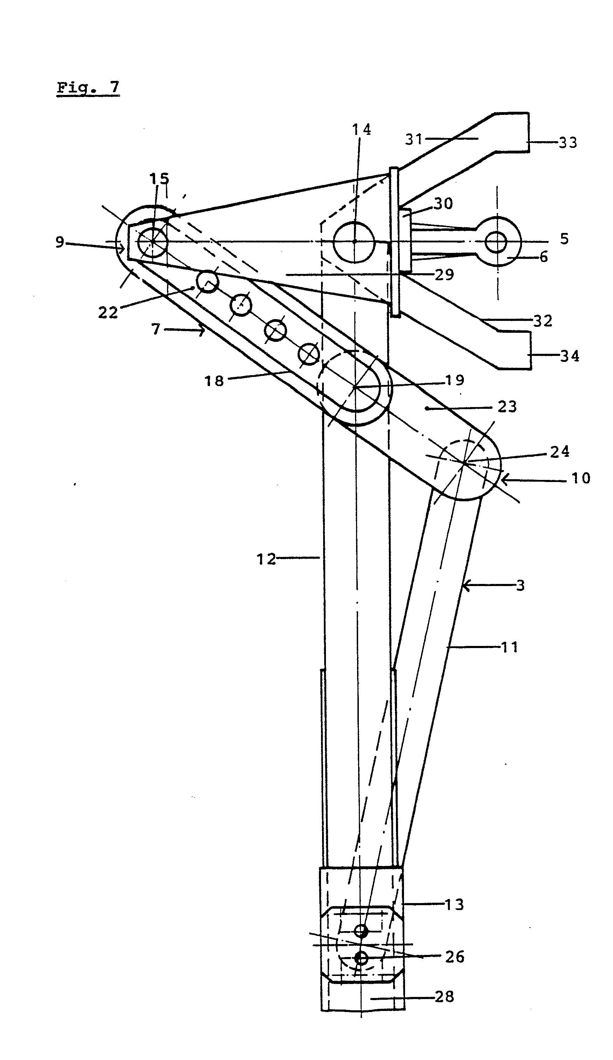

Wie den Fig. 4 bis 9 näher entnommen werden kann, ist die Stellvorrichtung 7 als mechanisches Hebelgetriebe ausgebildet, das einen ersten Doppelhebel 9, einen zweiten Doppelhebel 10 und einen Lenker 11 umfaßt. Dieses Hebelgetriebe 9,10,11 wirkt auf eine Hauptstrebe 12 der Anschlußvorrichtung 3, die in einer am Anhänger 1 befestigten Schiebeführung 13 verschieblich geführt ist.

Im einzelnen ist die Hauptstrebe 12, die bevorzugt als Vierkantrohr ausgebildet ist, an ihrem vorderen Ende über ein erstes Gelenk 14 mit dem ersten Doppelhebel 9 verbunden, dessen vorderer Teil das Anschlußglied 6 umfaßt. Das rückwärtige Ende des ersten Doppelhebels 9 ist über ein zweites Gelenk 15 mit dem zweiten Doppelhebel 10 verbunden, wobei das zweite Gelenk 15 entlang dem vorderen Bereich des zweiten Doppelhebels 10 verschieblich geführt ist. Bevorzugt wird das zweite Gelenk 15 von einem um einen Lagerzapfen 16 am ersten Doppelhebel 9 frei drehbar gelagerten Tastrad 17 gebildet, das in einer Längsführungsbahn 18 am zweiten Doppelhebel 10 geführt ist.

Der zweite Doppelhebel 10 ist zwischen seinen Enden mit der Hauptstrebe 12 über ein drittes Gelenk 19 verbunden, das von einem eine Lagerbüchse 20 durchgreifenden vertikalen Gelenkzapfen 21 gebildet ist, an dessen oberen, nach oben über die Hauptstrebe 12 überstehenden Ende der in Geradeausfahrstellung rückwärtige Hebelteil 22 des zweiten Doppelhebels 10 und an dessen unteren, nach unten über die Hauptstrebe 12 vorstehenden Ende der in Geradeausfahrstellung vordere Hebelteil 23 des zweiten Doppelhebels 10 angreift. Der zweite Doppelhebel 10 hat infolge dieser Ausbildung die Grundgestalt eines Z.

· An seinem vorderen, in Geradeausfahrstellung die Hauptstrebe untergreifenden Ende ist der zweite Doppelhebel 10 über ein viertes Gelenk 24 mit dem vorderen Ende des Lenkers 11 verbunden, der an seinem rückwärtigen Ende über ein fünftes Gelenk 26 an der Unterseite der Schiebeführung 13 mit dem Anhänger 1 verbunden ist. Die Gelenkachse 27 des fünften Gelenkes 26 ist vertikal ausgerichtet, verläuft in der vertikalen Längsmittelebene 28 des Anhängers 1 und hat eine zu den Gelenkachsen der Gelenke 14,15,19 und 24 parallele Ausrichtung.

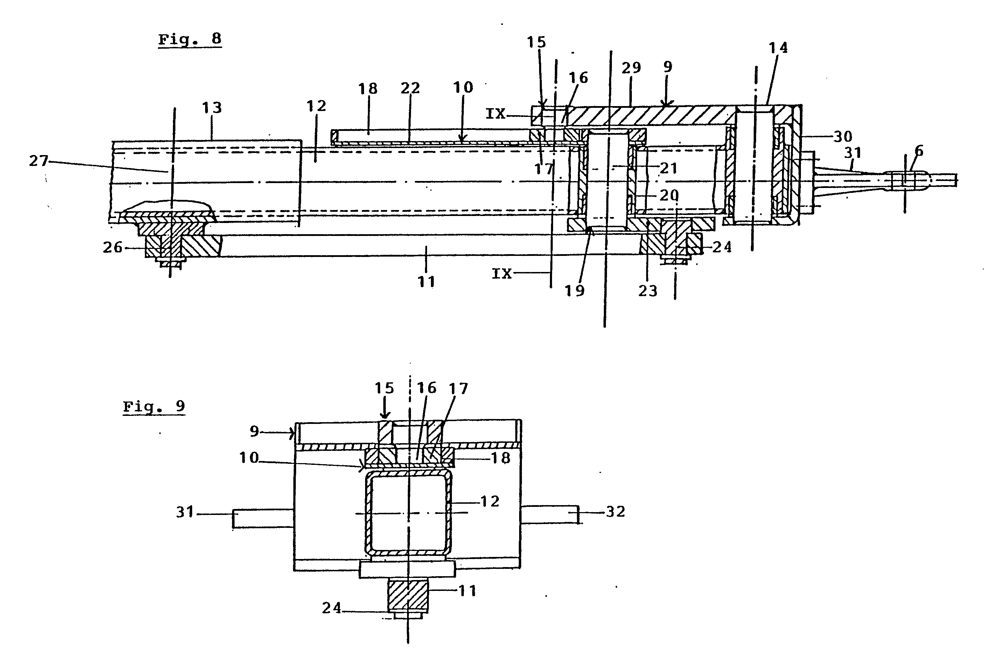

Wie insbesondere der Fig. 8 entnommen werden kann, umfaßt der erste Doppelhebel 9 einen rückwärtigen Hebelteil 29, dessen rückwärtigen Ende das zweite Gelenk 15 zugeordnet ist, und einen vorderen Hebelteil 30, der das Anschlußglied 6 sowie im Abstand beidseits des Anschlußgliedes 6 angeordnete Widerlagerarme 31,32 aufweist.

Die vorderen Enden der Widerlagerarme 31,32 weisen eine Stützebene definierende Anschlagflächen 33,34 auf, mit denen sie sich in Anhängestellung der Teile der Anschlußvorrichtung 3 am Zugfahrzeug 2 beidseits dessen Kupplung 4 abstützen und infolge dieser Abstützung den ersten Doppelhebel 9 gegen horizontale Schwenkbewegungen um die Kupplungsachse 5 verriegeln. Bei· der dargestellten Ausführung liegt die Kupplungsachse 5 in geringem Abstand vor der durch die Widerlagerarme 31,32 definierten Stützebene, jedoch ist eine verkürzte Ausführung bevorzugt, bei der die Kupplungsachse 5 mit der Stützebene der Widerlagerarme 31,32 zusammenfällt.

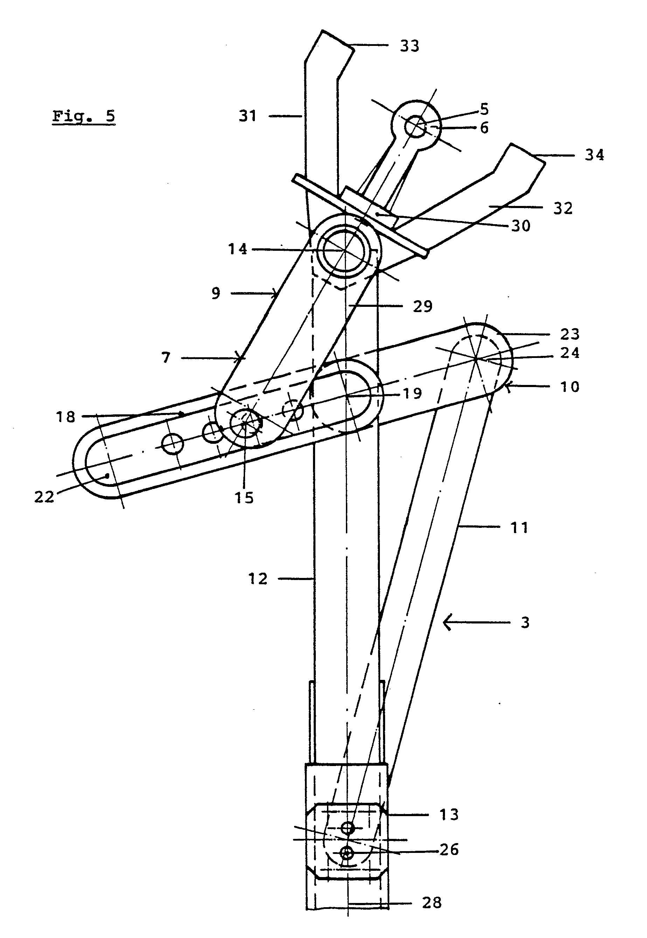

Wie den Fig. 4 bis 7 entnommen werden kann, schwenkt bei einem durch Übergang zur Kurvenfahrt auftretenden Einschlagwinkel zwischen Zugfahrzeug 2 und Anhänger 1 der erste Doppelhebel 9 um das erste Gelenk 14 (in Fig. 5 im Uhrzeigersinn), wodurch der zweite Doppelhebel 10 zu einer Schwenkbewegung um das dritte Gelenk 19 (in Fig. 5 ebenfalls im Uhrzeigersinn) veranlaßt wird. Dabei verschiebt sich das zweite Gelenk 15 entlang der Längsführungsbahn 18 ein Stück in Richtung auf das rückwärtige Ende des zweiten Doppelhebels 10 hin, wie dies aus einem Vergleich zwischen den Fig. 4 und 5 (bzw. 5 und 6 oder 6 und 7) ersichtlich ist. Entsprechend der Verschwenkung des zweiten Doppelhebels 10 erfährt auch der Lenker 11 eine Verschwenkung (in Fig. 5 im Uhrzeigersinn), und durch diese Verschwenkung kann die Hauptstrebe 12 eine Vorschubbewegung in ihrer Schiebeführung 13 ausführen, durch die sich der Abstand zwischen den Aufbauten der Fahrzeuge 1,2 vergrößert.

Die Hauptstrebe 12 übernimmt in ihrem Bereich zwischen den Gelenken 14,19 Zug- und bei Bremsvorgängen auch Druckkräfte sowie Lenkkräfte. In dem Bereich zwischen dem Gelenk 19 und dem Gelenk 26 werden von der Hauptstrebe 12 lediglich Lenkkräfte übertragen. Die Zug- bzw. Druckkraftübertragung übernehmen in diesem Bereich der Lenker 11 und die Doppelhebel 9,10.

Kehrt nach einer Kurvenfahrt der Lastzug in eine Geradeaus fahrt zurück, so schwenken die Doppelhebel 9,10 und der Lenker 11 in die Stellung gemäß Fig. 4 zurück, in der der Abstand zwischen dem Anschlußglied 6 und der vorderen Abschlußkante 8 des Anhängers 1 wieder den Mindestwert einnimmt.

## Ansprüche

1. Zentralachsanhänger (1) mit einer vorderseitigen Anschlußvorrichtung (3) für eine Anhängung an ein Zugfahrzeug (2), deren mit der Kupplung (4) des Zugfahrzeugs (2) verbindbares Anschlußglied (6) in Abhängigkeit vom Einschlagwinkel zwischen Zugfahrzeug und Anhänger mittels einer Stellvorrichtung (7) in seinem Abstand zur vorderen Abschlußkante des Anhängers verstellbar ist, wobei das Anschlußglied (6) über eine in einer Schiebeführung (13) des Anhängers (1) längsverschiebliche Hauptstrebe (12) der Anschlußvorrichtung (3) abgestützt und die Hauptstrebe 12) mittels eines mechanischen Hebelgetriebes (9,10,11) verschiebbar ist, **dadurch gekennzeichnet,** daß die Hauptstrebe (12) an ihrem vorderen Ende über ein erstes Gelenk (14) mit einem ersten Doppelhebel (9) verbunden ist, dessen vorderer Teil das als Kupplungsöse ausgebildete Anschlußglied (6) umfaßt und dessen rückwärtiges Ende mit einem zweiten Doppelhebel (10) über ein entlang dem rückwärtigen Bereich des zweiten Doppelhebels (10) verschieblich geführtes zweites Gelenk (15) verbunden ist, der zweite Doppelhebel (10) zwischen seinen Enden über ein drittes Gelenk (19) mit der Hauptstrebe (12) verbunden und an seinem vorderen Ende mittels eines vierten Gelenkes (24) am vorderen Ende eines Lenkers (11) angreift, der an seinem rückwärtigen Ende über ein fünftes Gelenk (26) im Bereich der Längsmittelebene der Schiebeführung (13) am Anhänger (1) angreift, und der erste Doppelhebel (9) im Abstand beidseits des Anschlußgliedes (6) angeordnete Widerlagerarme aufweist, deren vorderen Enden sich in Anhängestellung der Teile am Zugfahrzeug (2) beidseits dessen Kupplung (4) abstützen und den ersten Doppelhebel (9) gegen horizontale Schwenkbewegungen um die Kupplungsachse (5) verriegeln.

2. Anhänger nach Anspruch 1, **dadurch gekennzeichnet,** daß die Kupplungsachse (5) mit der Stützebene der Widerlagerarme (31,32) zusammenfällt.

3. Anhänger nach Anspruch 1, **dadurch gekennzeichnet,** daß das zweite Gelenk (15) von einem um einen Lagerzapfen 16) am ersten Doppelhebel (9) frei drehbar gelagerten Tastrad (17) gebildet ist, das in eine Längsführungsbahn (18) am zweiten Doppelhebel (10) eingreift.

4. Anhänger nach Anspruch 1, **dadurch gekennzeichnet,** daß die Hauptstrebe (12) der Anschlußvorrichtung (3) als Vierkantrohr ausgebildet ist.

Fig. 1

Fig. 2

**Fig. 3**

Fig. 4

Fig. 5

EP 0 356 849 A2

Fig. 6

Fig. 7

Fig. 8

Fig. 9

EP 0 356 849 A2